# EUROPÄISCHE PATENTANMELDUNG

(11) **EP 4 390 699 A1**
(43) Veröffentlichungstag der Anmeldung: **26.06.2024**
(21) Anmeldenummer: 23193448.0
(22) Anmeldetag: 25.08.2023
(51) Int. Cl.: G06F 11/263

(54) **COMPUTER-IMPLEMENTIERTES VERFAHREN ZUM BESTIMMEN KOMPATIBLER SYSTEMELEMENTE UND SYSTEM**

(30) Priorität: 20.12.2022 DE 202022134022 U
(71) Anmelder: dSPACE GmbH, 33102 Paderborn (DE)
(72) Erfinder: Misch, Thomas, 33102 Paderborn (DE); Hammer, Jan Hendrik, 33102 Paderborn (DE); Zubert, Thomas, 33102 Paderborn (DE)

(57) **Zusammenfassung**

Die Erfindung betrifft ein computerimplementiertes Verfahren und System zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen (10a, 10b, 10c, 10d), mit den Schritten: Bereitstellen (S1) einer vorerfassten Selektion oder Selektieren zumindest eines für die Ausführung des virtuellen Tests und/oder der Simulation der Fahrzeugvorrichtung und/oder der Fahrzeugfunktion erforderlichen ersten Systemelements (10a), Bestimmen (S2) zumindest eines, eine Kompatibilitätsanforderung des ersten Systemelements (10a) unterstützenden, zweiten Systemelements (10b), und Ausgeben (S3) des bestimmten, für die fehlerfreie Ausführung des virtuellen Tests und/oder der Simulation der Fahrzeugvorrichtung und/oder der Fahrzeugfunktion erforderlichen, die Kompatibilitätsanforderung des ersten Systemelements (10a) unterstützenden, zweiten Systemelements (10b).

## Beschreibung

Die vorliegende Erfindung betrifft ein computer-implementiertes Verfahren zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen.

Die Erfindung betrifft ferner ein System zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen.

Überdies betrifft die Erfindung ein computer-implementiertes Verfahren zum Ausführen eines virtuellen Tests und/oder einer Simulation einer Fahrzeugvorrichtung und/oder einer Fahrzeugfunktion unter Verwendung von, durch das erfindungsgemäße Verfahren bestimmten, zueinander kompatiblen Systemelementen. Des Weiteren betrifft die Erfindung ein Computerprogramm sowie einen computerlesbaren Datenträger.

### Stand der Technik

Fahrzeugvorrichtungen wie beispielsweise Steuergeräte und/oder einer Fahrzeugfunktionen wie z.B. Fahrassistenzfunktionen können mithilfe diverser Überprüfungsmethoden verifiziert bzw. validiert werden. Dabei können insbesondere virtuelle Tests verwendet werden.

Zur Erstellung virtueller Tests und/oder Simulationen sind dabei beispielsweise aus Testfahrten und/oder anderweitig gewonnene Sensordaten erforderlich.

Für eine Testausführung werden neben dem Test selbst unterschiedliche Systemelemente benötigt. Diese können beispielsweise ein zu testendes System, eine Testumgebung sowie ein Testsystem umfassen.

Das zu testende System beschreibt dabei ein zu testendes Element, z.B. eine ECU-Software. Die Testumgebung beschreibt die Umgebung, in der das zu testende System getestet wird und das Testsystem beschreibt das System auf dem der Test durchgeführt wird. Beispiele für das Testsystem sind HIL- oder SIL-Systeme, welche z.B. auf einem Ausführungsknoten in der Cloud ausführbar sind.

Da es in der Regel unterschiedliche bzw. mehrere zu testende Systeme, Testumgebungen und Testsysteme gibt, kann es zu der Situation kommen, dass nicht jede Kombination erwünscht oder gar möglich ist.

Im Falle einer Fehlkonfiguration eines Tests, bei welchem beispielsweise eine inkompatible Kombination aus zu testendem System, Testumgebung und Testsystem verwendet wird, kann es in der Folge zu einer fehlerhaften Testausführung in Verbindung mit einem Testabbruch kommen. Hierdurch werden Rechenzeit und/oder Rechenressourcen unnötigerweise gebunden sowie vermeidbare Kosten verursacht.

Bestehende Systeme zur Definition von Abhängigkeiten bzw. zum Finden von zueinander kompatiblen Elementen im Rahmen einer Ausführung eines virtuellen Tests und/oder einer Simulation einer Fahrzeugvorrichtung und/oder einer Fahrzeugfunktion weisen jedoch das Problem auf, dass sie nur aufwendige Möglichkeiten bieten, nach passenden Systemelementen zu suchen.

Es werden potentiell immer alle Systemelemente eines Systems bei der Konfiguration einbezogen. Der Anwender muss bei der Auswahl von abhängigen Elementen somit selbst wissen bzw. erkennen, welche der zur Verfügung stehenden Elemente kompatibel sind, ggf. anhand eines vordefinierten Kompatibilitätsmodells.

Demzufolge besteht ein Bedarf, bestehende Verfahren zur Konfiguration einer Ausführung eines virtuellen Tests und/oder einer Simulation einer Fahrzeugvorrichtung und/oder einer Fahrzeugfunktion dahingehend zu verbessern, dass fehlerhafte Testausführungen und/oder Simulationsausführungen aufgrund von Fehlkonfigurationen vermieden werden.

### Offenbarung der Erfindung

Die Aufgabe wird erfindungsgemäß durch ein computer-implementiertes Verfahren zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen mit den Merkmalen des Patentanspruchs 1 gelöst.

Des Weiteren wird die Aufgabe erfindungsgemäß durch ein System zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen mit den Merkmalen des Patentanspruchs 13 gelöst.

Darüber hinaus wird die Aufgabe durch ein Computerprogramm mit den Merkmalen des Patentanspruchs 14 und einen computerlesbaren Datenträger mit den Merkmalen des Patentanspruchs 15 gelöst.

Die Erfindung betrifft ein computerimplementiertes Verfahren zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen.

Das Verfahren umfasst ein Bereitstellen einer vorerfassten Selektion oder Selektieren zumindest eines für die Ausführung des virtuellen Tests und/oder der Simulation der Fahrzeugvorrichtung und/oder der Fahrzeugfunktion erforderlichen ersten Systemelements.

Unter einer vorerfassten Selektion wird dabei verstanden, dass ein Nutzer sämtliche zur Ausführung des virtuellen Tests und/oder der Simulation der Fahrzeugvorrichtung und/oder der Fahrzeugfunktion erforderlichen Systemelemente vorab selektiert und diese Selektion sodann als Datensatz bereitgestellt wird.

Das Verfahren umfasst ferner ein Bestimmen zumindest eines, eine Kompatibilitätsanforderung des ersten Systemelements unterstützenden, zweiten Systemelements.

Des Weiteren umfasst das Verfahren ein Ausgeben des bestimmten, für die fehlerfreie Ausführung des virtuellen Tests und/oder der Simulation der Fahrzeugvorrichtung und/oder der Fahrzeugfunktion erforderlichen, die Kompatibilitätsanforderung des ersten Systemelements unterstützenden, zweiten Systemelements.

Der Fachmann versteht dabei unter einem Bereitstellen, Bestimmen und/oder Ausgeben eines Systemelement ein Bereitstellen, Bestimmen und/oder Ausgeben von das Systemelement repräsentierenden Daten.

Die Erfindung betrifft ferner ein System zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen.

Das System umfasst eine Bereitstellungseinheit, welche dazu eingerichtet ist, eine vorerfasste Selektion oder ein Selektieren zumindest eines für die Ausführung des virtuellen Tests und/oder der Simulation der Fahrzeugvorrichtung und/oder der Fahrzeugfunktion erforderlichen ersten Systemelements bereitzustellen.

Des Weiteren umfasst das System eine Berechnungseinheit, welche dazu eingerichtet ist, zumindest ein, eine Kompatibilitätsanforderung des ersten Systemelements unterstützendes, zweites Systemelement zu bestimmen.

Das System umfasst ferner eine Ausgabeeinheit, welche dazu eingerichtet ist, das bestimmte, für die fehlerfreie Ausführung des virtuellen Tests und/oder der Simulation der Fahrzeugvorrichtung und/oder der Fahrzeugfunktion erforderliche, die Kompatibilitätsanforderung des ersten Systemelements unterstützende, zweite Systemelement auszugeben.

Die Erfindung betrifft ferner ein computer-implementiertes Verfahren zum Ausführen eines virtuellen Tests und/oder einer Simulation einer Fahrzeugvorrichtung und/oder einer Fahrzeugfunktion unter Verwendung von, durch das erfindungsgemäße Verfahren bestimmten, zueinander kompatiblen Systemelementen.

Das computer-implementierte Verfahren zum Ausführen des virtuellen Tests und/oder der Simulation der Fahrzeugvorrichtung und/oder der Fahrzeugfunktion kann beispielsweise auf einem Ausführungsknoten in der Cloud ausgeführt werden.

Die durch den virtuellen Test validierte und/oder durch das Simulationsverfahren simulierte Fahrzeugfunktion kann beispielsweise auf einem Steuergerät des Kraftfahrzeugs ausgeführt werden.

Die Erfindung betrifft überdies ein Computerprogramm mit Programmcode, um das erfindungsgemäße Verfahren durchzuführen, wenn das Computerprogramm auf einem Computer ausgeführt wird sowie einen computerlesbaren Datenträger mit Programmcode eines Computerprogramms, um das erfindungsgemäße Verfahren durchzuführen, wenn das Computerprogramm auf einem Computer ausgeführt wird.

Eine Idee der Erfindung ist es, durch das Bestimmen des zumindest einen, die Kompatibilitätsanforderung des ersten Systemelements unterstützenden, zweiten Systemelements eine Kompatibilität zwischen dem ersten Systemelement und dem zweiten Systemelement zu ermöglichen.

Somit kann in vorteilhafter Weise eine fehlerfreie Ausführung von, für den virtuellen Test und/oder die Simulation der Fahrzeugvorrichtung und/oder der Fahrzeugfunktion erforderlichen, zueinander kompatiblen Systemelementen erreicht werden.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass in einem Datenspeicher gespeicherte Systemelementdaten bereitgestellt werden, wobei jedes Systemelement zumindest eine Kompatibilitätsanforderung und/oder zumindest ein Kompatibilitätsattribut aufweist.

Die Kompatibilitätsanforderung eines jeweiligen Systemelements bezieht sich dabei auf ein Kompatibilitätsattribut eines weiteren Systemelements. Das Kompatibilitätsattribut eines vorliegenden Systemelements bezieht sich im Umkehrschluss auf die Kompatibilitätsanforderung eines weiteren Systemelements.

Gemäß einer weiteren bevorzugten Weiterbildung der Erfindung ist vorgesehen, dass eine Kompatibilität des ersten Systemelements zum zweiten Systemelement gegeben ist, wenn die Kompatibilitätsanforderung des ersten Systemelements mit einem Kompatibilitätsattribut des zweiten Systemelements übereinstimmt.

Somit ist in vorteilhafter Weise gewährleistet, dass das erste Systemelement zu dem zweiten Systemelement kompatibel ist, wodurch eine fehlerfreie Ausführung des virtuellen Tests und/oder der Simulation der Fahrzeugvorrichtung und/oder der Fahrzeugfunktion möglich ist.

Gemäß einer weiteren bevorzugten Weiterbildung der Erfindung ist vorgesehen, dass zum Bestimmen des zumindest einen, die Kompatibilitätsanforderung des ersten Systemelements unterstützenden, zweiten Systemelements, ein Abfragen des Datenspeichers nach, die Kompatibilitätsanforderung des ersten Systemelements erfüllenden Kompatibilitätsattributen, weiterer Systemelemente durchgeführt wird.

Somit werden sämtliche im Datenspeicher enthaltene Systemelementdaten nach die Kompatibilitätsanforderung des ersten Systemelements unterstützende Kompatibilitätsattributen weiterer Systemelemente abgefragt. Hierdurch können sämtliche zum ersten Systemelement kompatible weitere Systemelemente identifiziert werden. Aus dieser Teilmenge aller Systemelemente kann sodann eine Konfiguration des virtuellen Tests und/oder der Simulation durchgeführt werden.

Gemäß einer weiteren bevorzugten Weiterbildung der Erfindung ist vorgesehen, dass das erste Systemelement eine Mehrzahl unterschiedlicher Kompatibilitätsanforderungen an das zweite Systemelement und/oder eine Mehrzahl weiterer Systemelemente stellt.

Das erste Systemelement kann dabei eine beliebige Anzahl unterschiedlicher Kompatibilitätsanforderungen aufweisen, die von anderen Systemelementen zu erfüllen sind. Je nachdem, ob beispielsweise ein virtueller Test oder eine Simulation durchgeführt wird, können sich die Kompatibilitätsanforderungen eines Systemelements an die anderen Systemelemente unterscheiden.

Gemäß einer weiteren bevorzugten Weiterbildung der Erfindung ist vorgesehen, dass das erste Systemelement die zumindest eine Kompatibilitätsanforderung an das, mit dem ersten Systemelement direkt verbundene zweite Systemelement und/oder an ein, mit dem ersten Systemelement indirekt, über das zweite Systemelement, verbundenes drittes Systemelement stellt.

Hierdurch können Abhängigkeiten zwischen verschiedenen Systemelementen, die von einem gemeinsamen, vorgelagerten Systemelement abhängen, in vorteilhafter Weise berücksichtigt werden.

Gemäß einer weiteren bevorzugten Weiterbildung der Erfindung ist vorgesehen, dass bei dem Bereitstellen der vorerfassten Selektion des zumindest einen für die Ausführung des virtuellen Tests und/oder der Simulation der Fahrzeugvorrichtung und/oder der Fahrzeugfunktion erforderlichen ersten Systemelements eine Kompatibilitätsprüfung der vorerfassten Selektion durchgeführt wird, wobei bei Feststellen zumindest einer Inkompatibilität von Systemelementen eine Fehlermeldung erzeugt wird.

Somit kann der Nutzer in vorteilhafter Weise vor Starten des virtuellen Tests und/oder der Simulation über eine Inkompatibilität der Konfiguration von Systemelementen informiert werden.

Gemäß einer weiteren bevorzugten Weiterbildung der Erfindung ist vorgesehen, dass die Kompatibilitätsprüfung ein Bestimmen umfasst, ob die Kompatibilitätsattribute aller vorerfasst selektierten Systemelemente die Kompatibilitätsanforderungen aller vorerfasst selektierten Systemelemente erfüllen.

Die Kompatibilitätsprüfung ermöglicht somit das Identifizieren einer fehlerhaften Konfiguration. Ferner ist es dadurch möglich zu bestimmen, welches Systemelement einer möglichen Mehrzahl von Systemelementen eine fehlerhafte Konfiguration aufweist, wodurch ein Aufwand zur Fehlersuche bzw. Neukonfiguration reduziert werden kann.

Gemäß einer weiteren bevorzugten Weiterbildung der Erfindung ist vorgesehen, dass der virtuelle Test ein Model-in-the-Loop_Test, ein Software-in-the-Loop-Test, ein Processor-in-the-Loop-Test oder ein Hardware-in-the-Loop-Test der Fahrzeugvorrichtung und/oder der Fahrzeugfunktion ist, und wobei die Simulation ein Verhalten der Fahrzeugvorrichtung und/oder der Fahrzeugfunktion simuliert.

Der virtuelle Test weist somit ein diverses Anwendungsspektrum auf. Bei der Fahrzeugvorrichtung kann es sich z.B. um ein Steuergerät einer beliebigen Fahrzeugkomponente wie beispielsweise einem Bremssystem, einem Lenksystem, einem Infotainmentsystem, einem Kommunikationssystem und/oder einem Fahrassistenzsystem handeln. Bei der Fahrzeugfunktion kann es sich analog hierzu um eine entsprechende Funktion handeln, welche auf dem korrespondierenden, oben genannten Steuergerät ausgeführt wird.

Gemäß einer weiteren bevorzugten Weiterbildung der Erfindung ist vorgesehen, dass die Systemelemente ein zu testendes System, eine Testumgebung, ein Testsystem, eine Testart und/oder einen Test der Fahrzeugvorrichtung und/oder der Fahrzeugfunktion, einen zu testenden Fahrzeugtyp und/oder ein zu testendes Fahrzeug repräsentieren.

Hierdurch lassen sich die Randbedingungen für den Test einer beliebigen Fahrzeugvorrichtung und/oder Fahrzeugfunktion definieren.

Gemäß einer weiteren bevorzugten Weiterbildung der Erfindung ist vorgesehen, dass sich die Kompatibilitätsanforderung und/oder das Kompatibilitätsattribut auf ein spezifisches Systemelement und/oder eine spezifische Eigenschaft eines Systemelements bezieht.

Die Kompatibilitätsanforderung eines Systemelements bezieht sich dabei auf das Kompatibilitätsattribut eines weiteren Systemelements. Ferner bezieht sich das Kompatibilitätsattribut eines Systemelements auf eine Kompatibilitätsanforderung eines weiteren Systemelements.

Die hierin beschriebenen Merkmale des computerimplementierten Verfahrens zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen sind ebenso auf das System zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:

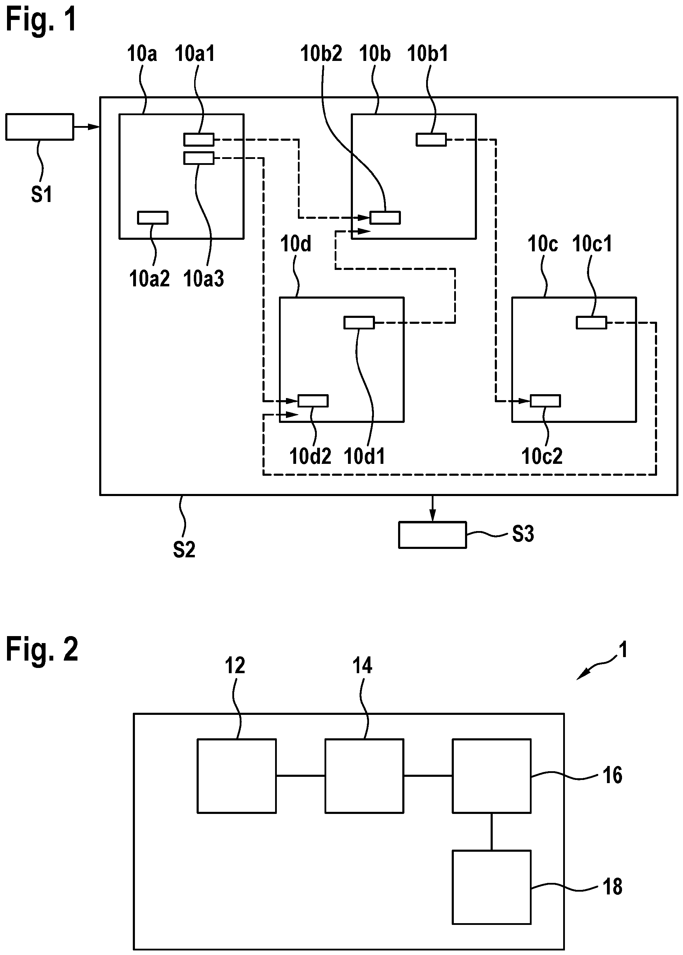

- Fig. 1: ein Ablaufdiagramm eines computerimplementierten Verfahrens zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen gemäß einer bevorzugten Ausführungsform der Erfindung; und
- Fig. 2: eine schematische Darstellung eines Systems zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

Das in Fig. 1 gezeigte Verfahren umfasst ein Bereitstellen S1 einer vorerfassten Selektion oder Selektieren zumindest eines für die Ausführung des virtuellen Tests und/oder der Simulation der Fahrzeugvorrichtung und/oder der Fahrzeugfunktion erforderlichen ersten Systemelements 10a.

Bei dem virtuellen Test kann es sich beispielsweise um einen Test einer autonomen Fahrfunktion handeln. In diesem Kontext kann die Testart beispielsweise durch einen Szenario-basierten Test, einen Datenwiedergabetest und/oder einen Schritt-basierten Test gegeben sein.

Ferner kann es sich bei dem virtuellen Test alternativ um den Test einer beliebigen Fahrzeugkomponente wie einem Batteriemanagementsystem eines Elektrofahrzeugs oder eines Plug-in Hybridfahrzeugs handeln.

Überdies kann es sich bei dem virtuellen Test und/oder der Simulation beispielsweise um Anwendungen wie Rapid control prototyping, Steuergeräte-Messung, -Applikation und -Diagnose sowie Zugriff auf Bussysteme (CAN, CAN FD, LIN, Ethernet) handeln.

Des Weiteren umfasst das Verfahren ein Bestimmen S2 zumindest eines, eine Kompatibilitätsanforderung des ersten Systemelements 10a unterstützenden, zweiten Systemelements 10b.

Das Verfahren umfasst darüber hinaus ein Ausgeben S3 des bestimmten, für die fehlerfreie Ausführung des virtuellen Tests und/oder der Simulation der Fahrzeugvorrichtung und/oder der Fahrzeugfunktion erforderlichen, die Kompatibilitätsanforderung des ersten Systemelements 10a unterstützenden, zweiten Systemelements 10b.

Ein Datenspeicher 12 stellt eine Vielzahl von Systemelementdaten D bereit, wobei jedes Systemelement zumindest eine Kompatibilitätsanforderung und/oder zumindest ein Kompatibilitätsattribut aufweist.

Eine Kompatibilität des ersten Systemelements 10a zum zweiten Systemelement ist dabei gegeben, wenn die Kompatibilitätsanforderung des ersten Systemelements 10a mit einem Kompatibilitätsattribut des zweiten Systemelements 10b übereinstimmt.

Zum Bestimmen des zumindest einen, die Kompatibilitätsanforderung des ersten Systemelements 10a unterstützenden, zweiten Systemelements 10b wird ein Abfragen des Datenspeichers 12 nach die Kompatibilitätsanforderung des ersten Systemelements 10a erfüllenden Kompatibilitätsattributen weiterer Systemelemente durchgeführt.

Das erste Systemelement kann ferner eine Mehrzahl unterschiedlicher Kompatibilitätsanforderungen an das zweite Systemelement und/oder eine Mehrzahl weiterer Systemelemente stellen.

Das erste Systemelement stellt die zumindest eine Kompatibilitätsanforderung an das, mit dem ersten Systemelement direkt verbundene zweite Systemelement und/oder an ein, mit dem ersten Systemelement indirekt, über das zweite Systemelement, verbundenes drittes Systemelement.

Bei dem Bereitstellen der vorerfassten Selektion des zumindest einen für die Ausführung des virtuellen Tests und/oder der Simulation der Fahrzeugvorrichtung und/oder der Fahrzeugfunktion erforderlichen ersten Systemelements 10a wird des Weiteren eine Kompatibilitätsprüfung der vorerfassten Selektion durchgeführt. Bei Feststellen zumindest einer Inkompatibilität von Systemelementen 10a, 10b, 10c, 10d wird eine Fehlermeldung erzeugt.

Die Kompatibilitätsprüfung umfasst dabei ein Bestimmen, ob die Kompatibilitätsattribute aller vorerfasst selektierten Systemelemente die Kompatibilitätsanforderungen aller vorerfasst selektierten Systemelemente erfüllen.

Ferner ist der virtuelle Test ein Model-in-the-Loop_Test, ein Software-in-the-Loop-Test, ein Processor-in-the-Loop-Test oder ein Hardware-in-the-Loop-Test der Fahrzeugvorrichtung und/oder der Fahrzeugfunktion. Die Simulation simuliert ein Verhalten der Fahrzeugvorrichtung und/oder der Fahrzeugfunktion.

Die Systemelemente repräsentieren ein zu testendes System, eine Testumgebung, ein Testsystem, eine Testart und/oder einen Test der Fahrzeugvorrichtung und/oder der Fahrzeugfunktion, einen zu testenden Fahrzeugtyp und/oder ein zu testendes Fahrzeug.

Darüber hinaus bezieht sich die Kompatibilitätsanforderung und/oder das Kompatibilitätsattribut auf ein spezifisches Systemelement und/oder eine spezifische Eigenschaft eines Systemelements.

Fig. 2 zeigt eine schematische Darstellung eines Systems zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen 10a, 10b, 10c, 10d gemäß der bevorzugten Ausführungsform der Erfindung.

Das System umfasst eine Bereitstellungseinheit, welche dazu eingerichtet ist, eine vorerfasste Selektion oder ein Selektieren zumindest eines für die Ausführung des virtuellen Tests und/oder der Simulation der Fahrzeugvorrichtung und/oder der Fahrzeugfunktion erforderlichen ersten Systemelements 10a bereitzustellen.

Des Weiteren umfasst das System eine Berechnungseinheit, welche dazu eingerichtet ist, zumindest ein, eine Kompatibilitätsanforderung des ersten Systemelements 10a unterstützendes, zweites Systemelement zu bestimmen.

Das System umfasst darüber hinaus eine Ausgabeeinheit, welche dazu eingerichtet ist, das bestimmte, für die fehlerfreie Ausführung des virtuellen Tests und/oder der Simulation der Fahrzeugvorrichtung und/oder der Fahrzeugfunktion erforderliche, die Kompatibilitätsanforderung des ersten Systemelements 10a unterstützende, zweite Systemelement auszugeben.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken. Beispielsweise kann eine Reihenfolge der Verfahrensschritte abgeändert werden. Das Verfahren kann ferner zumindest abschnittsweise sequentiell oder parallel durchgeführt werden.

### Bezugszeichenliste

- 1: System
- 10a: erstes Systemelement
- 10b: zweites Systemelement
- 10c: drittes Systemelement
- 10d: weiteres Systemelement
- 10a1: Kompatibilitätsanforderung
- 10b1: Kompatibilitätsanforderung
- 10c1: Kompatibilitätsanforderung
- 10d1: Kompatibilitätsanforderung
- 10a2: Kompatibilitätsattribut
- 10b2: Kompatibilitätsattribut
- 10c2: Kompatibilitätsattribut
- 10d2: Kompatibilitätsattribut
- 10a3: Kompatibilitätsanforderung
- 12: Datenspeicher
- 14: Bereitstellungseinheit
- 16: Berechnungseinheit
- 18: Ausgabeeinheit
- S1 - S3: Verfahrensschritte

## Patentansprüche

1. Computer-implementiertes Verfahren zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen (10a, 10b, 10c, 10d), mit den Schritten:
Bereitstellen (S1) einer vorerfassten Selektion oder Selektieren zumindest eines für die Ausführung des virtuellen Tests und/oder der Simulation der Fahrzeugvorrichtung und/oder der Fahrzeugfunktion erforderlichen ersten Systemelements (10a);
Bestimmen (S2) zumindest eines, eine Kompatibilitätsanforderung (10a1) des ersten Systemelements (10a) unterstützenden, zweiten Systemelements (10b); und
Ausgeben (S3) des bestimmten, für die fehlerfreie Ausführung des virtuellen Tests und/oder der Simulation der Fahrzeugvorrichtung und/oder der Fahrzeugfunktion erforderlichen, die Kompatibilitätsanforderung (10a1) des ersten Systemelements (10a) unterstützenden, zweiten Systemelements (10b).

2. Computer-implementiertes Verfahren nach Anspruch 1, wobei in einem Datenspeicher (12) gespeicherte Systemelementdaten (D) bereitgestellt werden, wobei jedes Systemelement (10a, 10b, 10c, 10d) zumindest eine Kompatibilitätsanforderung (10a1, 10b1, 10c1, 10d1) und/oder zumindest ein Kompatibilitätsattribut (10a2, 10b2, 10c2, 10d2) aufweist.

3. Computer-implementiertes Verfahren nach Anspruch 2, wobei eine Kompatibilität des ersten Systemelements (10a) zum zweiten Systemelement (10b) gegeben ist, wenn die Kompatibilitätsanforderung (10a1) des ersten Systemelements (10a) mit einem Kompatibilitätsattribut (10b2) des zweiten Systemelements (10b) übereinstimmt.

4. Computer-implementiertes Verfahren nach Anspruch 2 oder 3, wobei zum Bestimmen des zumindest einen, die Kompatibilitätsanforderung (10a1) des ersten Systemelements (10a) unterstützenden, zweiten Systemelements (10b) ein Abfragen des Datenspeichers (12) nach die Kompatibilitätsanforderung (10a1) des ersten Systemelements (10a) erfüllenden Kompatibilitätsattributen (10a2, 10b2, 10c2, 10d2) weiterer Systemelemente (10b, 10c, 10d) durchgeführt wird.

5. Computer-implementiertes Verfahren nach einem der vorhergehenden Ansprüche, wobei das erste Systemelement (10a) eine Mehrzahl unterschiedlicher Kompatibilitätsanforderungen (10a1, 10a3) an das zweite Systemelement (10b) und/oder eine Mehrzahl weiterer Systemelemente (10c, 10d) stellt.

6. Computer-implementiertes Verfahren nach einem der vorhergehenden Ansprüche, wobei das erste Systemelement (10a) die zumindest eine Kompatibilitätsanforderung (10a1) an das, mit dem ersten Systemelement (10a) direkt verbundene zweite Systemelement (10b) und/oder an ein, mit dem ersten Systemelement (10a) indirekt, über das zweite Systemelement (10b), verbundenes drittes Systemelement (10c) stellt.

7. Computer-implementiertes Verfahren nach einem der vorhergehenden Ansprüche, wobei bei dem Bereitstellen (S1) der vorerfassten Selektion des zumindest einen für die Ausführung des virtuellen Tests und/oder der Simulation der Fahrzeugvorrichtung und/oder der Fahrzeugfunktion erforderlichen ersten Systemelements (10a) eine Kompatibilitätsprüfung der vorerfassten Selektion durchgeführt wird, wobei bei Feststellen zumindest einer Inkompatibilität von Systemelementen (10a, 10b, 10c, 10d) eine Fehlermeldung erzeugt wird.

8. Computer-implementiertes Verfahren nach Anspruch 7, wobei die Kompatibilitätsprüfung ein Bestimmen umfasst, ob die Kompatibilitätsattribute (10a2, 10b2, 10c2, 10d2) aller vorerfasst selektierten Systemelemente (10a, 10b, 10c, 10d) die Kompatibilitätsanforderungen (10a1, 10b1, 10c1, 10d1) aller vorerfasst selektierten Systemelemente (10a, 10b, 10c, 10d) erfüllen.

9. Computer-implementiertes Verfahren nach einem der vorhergehenden Ansprüche, wobei der virtuelle Test ein Model-in-the-Loop_Test, ein Software-in-the-Loop-Test, ein Processor-in-the-Loop-Test oder ein Hardware-in-the-Loop-Test der Fahrzeugvorrichtung und/oder der Fahrzeugfunktion ist, und wobei die Simulation ein Verhalten der Fahrzeugvorrichtung und/oder der Fahrzeugfunktion simuliert.

10. Computer-implementiertes Verfahren nach einem der vorhergehenden Ansprüche, wobei die Systemelemente (10a, 10b, 10c, 10d) ein zu testendes System, eine Testumgebung, ein Testsystem, eine Testart und/oder einen Test der Fahrzeugvorrichtung und/oder der Fahrzeugfunktion, einen zu testenden Fahrzeugtyp und/oder ein zu testendes Fahrzeug repräsentieren.

11. Computer-implementiertes Verfahren nach Anspruch 10, wobei sich die Kompatibilitätsanforderung (10a1, 10b1, 10c1, 10d1) und/oder das Kompatibilitätsattribut (10a2, 10b2, 10c2, 10d2) auf ein spezifisches Systemelement (10a, 10b, 10c, 10d) und/oder eine spezifische Eigenschaft eines Systemelements (10a, 10b, 10c, 10d) bezieht.

12. Computer-implementiertes Verfahren zum Ausführen eines virtuellen Tests und/oder einer Simulation einer Fahrzeugvorrichtung und/oder einer Fahrzeugfunktion unter Verwendung von, durch das Verfahren nach einem der Ansprüche 1 bis 11 bestimmten, zueinander kompatiblen Systemelementen (10a, 10b, 10c, 10d).

13. System (1) zum Bestimmen von, für eine fehlerfreie Ausführung eines virtuellen Tests und/oder einer Simulation einer Fahrzeugvorrichtung und/oder einer Fahrzeugfunktion erforderlichen, zueinander kompatiblen Systemelementen (10a, 10b, 10c, 10d), umfassend:
eine Bereitstellungseinheit (14), welche dazu eingerichtet ist, eine vorerfasste Selektion oder ein Selektieren zumindest eines für die Ausführung des virtuellen Tests und/oder der Simulation der Fahrzeugvorrichtung und/oder der Fahrzeugfunktion erforderlichen ersten Systemelements (10a) bereitzustellen;
eine Berechnungseinheit (16), welche dazu eingerichtet ist, zumindest ein, eine Kompatibilitätsanforderung (10a1) des ersten Systemelements (10a) unterstützendes, zweites Systemelement (10b) zu bestimmen; und
eine Ausgabeeinheit (18), welche dazu eingerichtet ist, das bestimmte, für die fehlerfreie Ausführung des virtuellen Tests und/oder der Simulation der Fahrzeugvorrichtung und/oder der Fahrzeugfunktion erforderliche, die Kompatibilitätsanforderung (10a1) des ersten Systemelements (10a) unterstützende, zweite Systemelement auszugeben.

14. Computerprogramm mit Programmcode, um das Verfahren nach einem der Ansprüche 1 bis 12 durchzuführen, wenn das Computerprogramm auf einem Computer ausgeführt wird.

15. Computerlesbarer Datenträger mit Programmcode eines Computerprogramms, um das Verfahren nach einem der Ansprüche 1 bis 12 durchzuführen, wenn das Computerprogramm auf einem Computer ausgeführt wird.
